Europäisches Patentamt

European Patent Office

Office européen des brevets

(19)

(11) **EP 0 384 961 B2**

(12) # NEUE EUROPÄISCHE PATENTSCHRIFT

(45) Veröffentlichungstag und Bekanntmachung des Hinweises auf die Entscheidung über den Einspruch:
**05.09.2001   Patentblatt 2001/36**

(51) Int Cl.7: **H04Q 3/68**

(45) Hinweis auf die Patenterteilung:
**30.03.1994   Patentblatt 1994/13**

(21) Anmeldenummer: **89119208.0**

(22) Anmeldetag: **17.10.1989**

(54) **Verfahren zur schrittweisen Erweiterung eines dreistufigen Koppelfeldes**

Method for the stepwise extension of a three-stage switching network

Procédé pour l'extension progressive d'un réseau de commutation à trois étages

(84) Benannte Vertragsstaaten:
**DE FR GB IT SE**

(30) Priorität: **02.03.1989   DE 3906545**

(43) Veröffentlichungstag der Anmeldung:
**05.09.1990   Patentblatt 1990/36**

(73) Patentinhaber: **ROBERT BOSCH GMBH
70442 Stuttgart (DE)**

(72) Erfinder: **Brünle, Siegfried, Dipl.-Ing.
D-7150 Backnang-Strümpfelbach (DE)**

(56) Entgegenhaltungen:
EP-A- 0 217 555        DE-A- 2 803 065
GB-A- 2 004 440        US-A- 4 400 627
US-A- 4 587 649

• **PATENT ABSTRACTS OF JAPAN, Band 10, Nr. 384 (E-466)[2441], 23. Dezember 1986 & JP-A-61174899**

EP 0 384 961 B2

**Beschreibung**

Die Erfindung betrifft ein Verfahren gemäß dem Oberbegriff des Patentanspruches 1. In der EP-A-0 333 922 wurde ein dreistufiges blockierungsfreies und redundantes Koppelfeld vorgeschlagen, welches auch bei Ausfall eines beliebigen Koppelvielfachs (Koppelblocks) noch blockierungsfrei ist. Wenn ein solches Koppelfeld unter Beibehaltung der Blockierungsfreiheit ausgebaut, d. h. erweitert werden soll, müssen oft alle oder zumindest sehr viele Koppelbausteine ausgetauscht werden, oder es müssen sehr viele Koppelbausteine ergänzt werden.

Aus der DE-C2-11 30 482 ist ein schrittweiser Ausbau eines mehrstufigen Koppelfeldes an sich bekannt. Dort werden die Zwischenleitungen entsprechend dem Schema des Vollausbaus eingelegt und bei einem Teilausbau die nicht beschalteten und nicht weiterführenden Zwischenleitungen derart miteinander verbunden, daß alle Ausgänge der ersten Koppelstufe weiterführende Verbindungen erreichen. Über die Art des schrittweisen Ausbaus ist der DE-C2-11 30 482 jedoch nichts zu entnehmen.

Aus der DE-A1-36 40 849 ist ein blockierungsfreies dreistufiges Verteilkoppelfeld bekannt. Zur Erweiterung der durchzuschaltenden Verbindungen sind in den Koppelvielfachen Verzweigungen schaltbar. Diese Methode ist jedoch nur sinnvoll anwendbar, wenn mehrere Teilnehmer mit demselben Signal beaufschlagt werden sollen.

Aufgabe der Erfindung ist es, ausgehend vom Oberbegriff des Patentanspruches 1 ein Verfahren anzugeben, welches eine schrittweise Erweiterung des Koppelfeldes mit möglichst wenig Aufwand an zusätzlichen Koppelbausteinen gestattet. Diese Aufgabe wird durch die Schritte des Patentanspruchs 1, gelöst. Die Patentansprüche 2 bis 4 betreffen Weiterbildungen dieser Lösungen.

Das Verfahren nach der Erfindung besitzt folgende Vorteile: Der Verlauf der Zahl der Koppelbausteine über der Anschlußzahl ist im wesentlichen linear. Dies bedeutet, daß die Erweiterung ohne Vorleistung für den späteren Ausbau erfolgt. Dies wird dadurch erreicht, daß bei einer Erweiterung um wenige zusätzliche Anschlußzahlen kein sofortiger Ausbau der gesamten zweiten Stufe erfolgen muß. Es müssen bei der schrittweisen Erweiterung nach der Erfindung anfangs nur Module notwendiger, d.h. kleiner Größe, verwendet werden. Die Erweiterung bis zur endgültigen Modulgröße im Endausbau kann in mehreren Zwischenschritten mit jeweils steigender Modulgröße erfolgen. Ein weiterer Vorteil der Erfindung ergibt sich dadurch, daß die Erweiterung eines redundanten Koppelfeldes während des Betriebs ohne Betriebsbeeinträchtigung erfolgen kann, indem die auszutauschenden Koppelblöcke über redundante Verbindungen freigeschaltet werden.

Anhand der Zeichnungen und Tabellen werden Ausführungen der Erfindung nun näher erläutert. Es zeigen

Fig. 1 ein dreistufiges redundantes blockierungsfreies Koppelfeld gemäß EP-A-0 333 922,
Fig. 2 eine Variante für ein redundantes Koppelfeld,
Fig. 3 eine weitere Variante für ein redundantes Koppelfeld,
Fig 4 die Erweiterung eines redundanten Koppelfeldes durch Vergrößern der Koppelblöcke in der zweiten Stufe,
Fig. 5 bis 9 die verschiedenen Ausbaumöglichkeiten für redundante Koppelfelder, gemäß den Tabellen 1 bis 13.
Fig. 10 eine Erweiterung eines redundanten Koppelfeldes durch Vergrößern der Koppelblöcke in der ersten bzw. dritten Stufe.

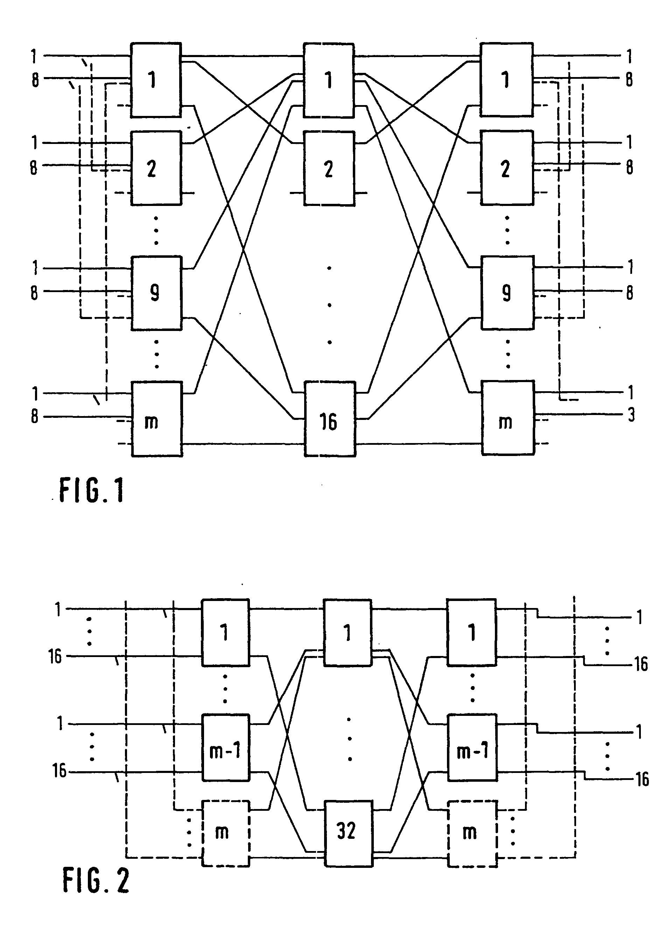

Zum besseren Verständnis der Erfindung werden zuerst drei verschiedenen dreistufige blockierungsfreie Clos-Koppelfelder mit Redundanz betrachtet. Redundanz bedeutet dabei, daß ein beliebiger Koppelblock ausfallen darf, ohne daß die Blockierungsfreiheit verloren geht. Bei einem blockierungsfreien Clos-Koppelfeld besteht die erste Stufe aus (n x 2n-1)-Koppelblöcken und die dritte Stufe aus (2n-1 x n)-Koppelblöcken, wobei n die Anzahl der Eingänge der einzelnen Koppelblöcke der ersten Stufe bzw. die Anzahl der Ausgänge der einzelnen Koppelblöcke der dritten Stufe bedeutet. Bei Verwendung quadratischer Module in der ersten und dritten Stufe besteht die Möglichkeit, die nicht benötigten Eingänge für die Redundanz zu verwenden. Von dieser Möglichkeit wird in der EP-A-0 333 922 Gebrauch gemacht. Dort sind die redundanten n Eingänge der ersten Stufe (bzw. redundaten n Ausgänge der dritten Stufe) einzeln mit nichtredundanten Eingängen (bzw. Ausgängen) anderer Koppelblöcke der gleichen Stufe verbunden und zwar so, daß die n redundanten Eingänge (bzw. Ausgänge) eines Koppelblocks einzeln mit nichtredundanten Eingängen (bzw. Ausgängen) von anderen Koppelblöcken verbunden sind. Diese Variante eines Clos-Koppelfeldes mit Redundanz - Koppelfeld A - ist in Fig. 1 mit n = 8 dargestellt. Die gestrichelten Verbindungswege führen über die redundanten Eingänge (bzw. Ausgänge). Im Gegensatz zum Clos-Koppelfeld ohne Redundanz mit 2n-1 Koppelblöcken in der zweiten Stufe sind bei diesem Koppelfeld 2n = 16 Koppelblöcke in der zweiten Stufe vorgesehen.

Fig. 2 zeigt eine andere Variante eines blockierungsfreien Koppelfeldes mit Redundanz - Koppelfeld B. Bei diesem Koppelfeld wird die Redundanz dadurch geschaffen, daß jeweils ein Koppelblock in der ersten und dritten Stufe für die redundanten Leitungen (gestrichelt) reserviert ist. Somit können bei einem Ausfall eines Koppelvielfachs in der ersten und dritten Stufe die Ersatzverbindungen über das reservierte Koppelvielfach blockierungsfrei durchgeschaltet werden. Im Gegensatz zum Koppelfeld A dürfen in allen drei Koppelfeldstufen gleichzeitig jeweils ein Koppelvielfach ausfallen, ohne daß die Blockierungsfreiheit verloren geht. Beim Koppelfeld B sind an den Koppelfelcleingängen Umschalter notwendig.

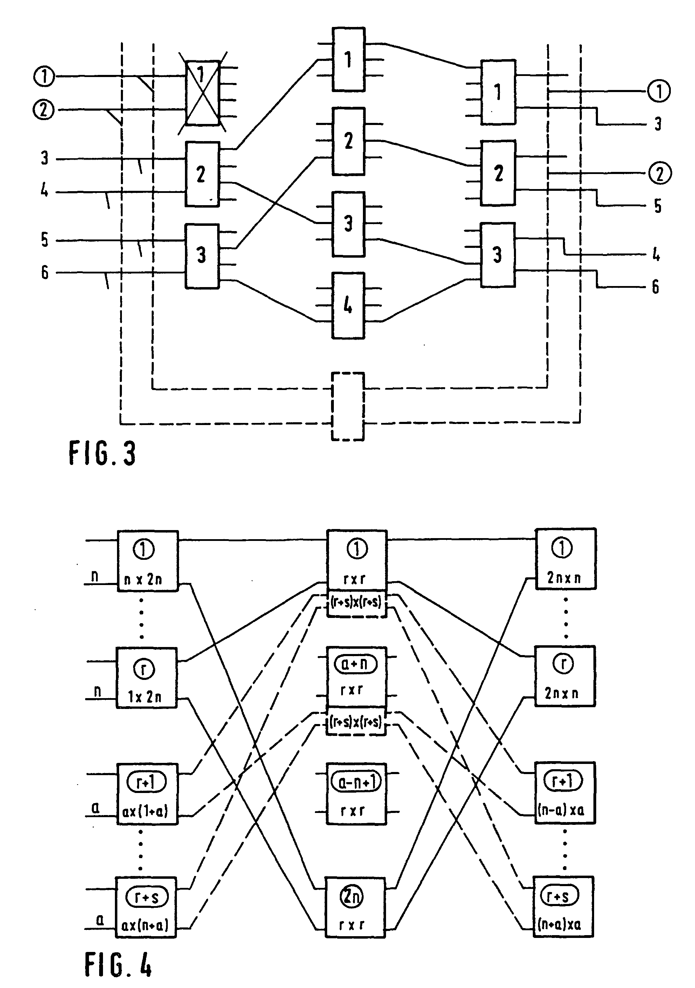

Bei dem in Fig. 3 als weitere Variante dargestellten Koppelfeld C wird die Redundanz durch einen zum Clos-Koppelfeld parallelen, zusätzlichen Koppelblock geschaffen. Fig. 3 zeigt für n = 2 und m = 3, daß bei der Verwendung nur eines zusätzlichen (n*n)-Koppelvielfachs die Blockierungsfreiheit verloren geht (Ausfall des Koppelblocks 1 der ersten Stufe). Das Problem tritt dabei an den Koppelfeldausgängen auf, wo zwei Redundanzausgänge auf nur einen Ausgang des zusätzlichen Koppelblocks zugreifen. Für die Blockierungsfreiheit müßte der parallele Koppelblock die Größe N*N haben, wobei N die Gesamtzahl der Eingänge bzw. Ausgänge ist, was einer Verdopplung des Koppelfeldes entsprechen wurde. Dies wäre jedoch sehr aufwendig, so daß diese Koppelfeldvariante nicht weiter betrachtet wird.

Die erfindungsgemäße modulare Erweiterung der zuvor beschriebenen redundanten Koppelfelder ohne Betriebsbeeinträchtigung wird nun anhand der Varianten A und B näher erläutert. Die Erweiterung mit einem sofortigen vollständige Ausbau der zweiten Stufe wird nachfolgend als Ausbau 1 bezeichnet und die Erweiterung in Schritten als Ausbau II.

Beim Ausbau I und beim Ausbau II werden zur aufwandsarmen Erweiterung immer nur die notwendigen Module eingesetzt. Schwierigkeiten treten bei der Erweiterung der notwendigen Module durch größere Module auf. Hier müssen im Betrieb kleinere Module durch größere Module ersetzt werden. Infolge der jederzeit vorhandenen Redundanz kann jedoch nach einem Umschalten auf Ersatzwege jeder Koppelblock entfernt und ersetzt werden, so daß eine Erweiterung während des Betriebs prinzipiell immer möglich ist.

Ein Beispiel für diese Variante ist der Ausbau eines Koppelfeldes mit dem Endausbau N über Optimalausbaustufen. Die Optimalausbaustufen haben eine voll und homogen bestückte zweite Koppelfeldstufe (16*16, 32*32, 64*64). Die erste und dritte Stufe ist entsprechend dem in der zweiten Stufe eingebauten Modultyp ebenfalls voll ausgebaut, so daß das Koppelfeld mit der Minimalzahl an 16*16 Koppelbausteinen auskommt. Das Koppelfeld A nach Fig. 1 mit 8x16 nichtredundanten Koppelpunkten pro 16x16 Koppelblöcken in der ersten Stufe besitzt somit Optimalausbauten bei 128, 256, 512 und 1024 Anschlüssen und das Koppelfeld B nach Fig. 2 mit 16x32 Koppelblöcken in der ersten Stufe bei 240, 496, 752 und 1008 Anschlüssen (ausschließlich Redundanz). Zwischen den beiden Optimalausbauten kann der Ausbau I oder der Ausbau II angewendet werden. Dieser Ausbau erfolgt beispielhaft ausgehend von einem Ausführungsbeispiel eines Optimalausbaus mit r Koppelblöcken der Größe (n x 2n) in der ersten Stufe, 2n Koppelblöcken der Größe (r x r) in der der ersten Stufe, 2n Koppelblöcken der Größe (r x r) in der zweiten Stufe und r Koppelblöcken der Größe (2n x n) in der dritten Stufe in folgenden Schritten:

1. Das Koppelfeld wird um N = s·a zusätzliche Anschlußzahlen erweitert. Dabei werden die erste und dritte Stufe schrittweise um s zusätzliche Koppelblöcke mit je a Eingängen neu in Betrieb genommen, wobei die Bedingung a≦n eingehalten wird. (Fig. 4).

2. Bei der zweiten Stufe werden die vorhandenen Koppelblöcke gegen neue Koppelblöcke ausgetauscht, deren Anschlußzahl ein Vielfaches der Amichlußzahl vorhandener Koppelblöcke beträgt, wobei die Anzahl der auszutauschenden Koppelblöcke durch die Zahl der Eingänge eines neuen Koppelblóckes der ersten Stufe bestimmt wird. Im Falle r = 0; d.h. beim Grundaufbau eines Koppelfeldes, ausgehend von N = 0 ergeben sich für die Struktur des erweiterten Koppelfeldes folgende Beziehungen:

erste Stufe : s (a x 2a)
zweite Stufe: 2a(s x s)
dritte Stufe: s (2a x a)

Für r ≠ 0; d.h. das Koppelfeld wird über eine bestehende Optimalausbaustufe erweitert, lauten diese Beziehungen:

erste Stufe :

$$r(n \times 2n)$$

$$s(a \times [a + n]),$$

zweite Stufe:

$$[n + a]([r + s] \times [r + s])$$

$$[n-a](r \times r)$$

dritte Stufe:

$$r(2n \times n)$$

$$s([a+n] \times a)$$

Im Falle a = n (Ausbau I) werden sofort alle Koppelblöcke in der zweiten Stufe ausgebaut, d.h. gegen Koppelblöcke größerer Anschlußzahlen ausgetauscht, hier gegen Koppelblöcke der Größe (r + s) x (r + s). Im Falle a<n (Ausbau II) werden dagegen nur n + a Koppelblöcke der Größe (s x s) in der zweiten Stufe gegen n + a Koppelblöcke der Größe (r + s) x (r + s) ausgetauscht. Dieser Austausch von Koppelblöcken in der zweiten Stufe kann während des Betriebs erfolgen. Das Koppelfeld muß also während des Austauschs nicht stillgelegt werden. Es wird hierzu folgendermaßen vorgegangen:

- Zuerst wird der auszutauschende Koppelblock in der zweiten Stufe freigeschaltet, d.h. seine Verbindungswege werden über den in der zweiten Stufe vorgesehenen redundanten Koppelblock umgeleitet,
- nun kann der Austausch des freigeschalteten Koppelblocks vorgenommen werden,
- nach dem Austausch werden die vorgenannten Schritte mit anderen auszutauschenden Koppelblöcken so oft wiederholt,bis alle gewünschten Koppelblöcke der zweiten Stufe ausgetauscht sind,
- anschließend werden die zusätzlichen Koppelblöcke der ersten und dritten Stufe gesteckt und alle neuen ausgetauschten und zusätzlichen Koppelblöcke verkabelt.

Soll eine Erweiterung ausgehend von einem Ausbau, der zwischen zwei Optimalausbaustufen gelegen ist, vorgenommen werden, so kann man entweder neue Koppelblöcke der Größe a x (n+a), mit a≦n, in der ersten Stufe hinzufügen oder die Anschlußzahl der vorhandenen a x (n+a) Koppelblöcke in der ersten Stufe erweitern bis maximal n = a.

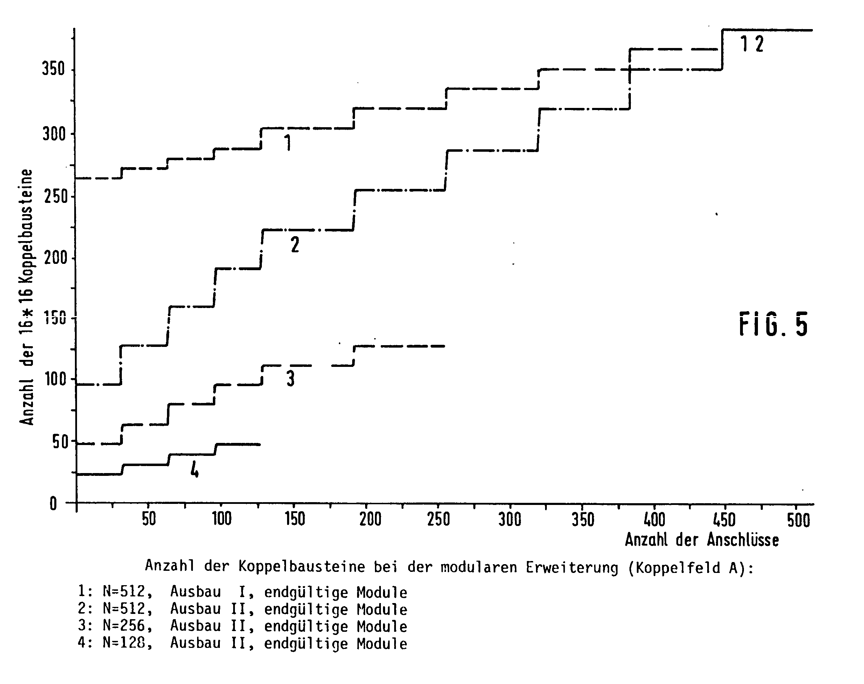

Alle aufgezeigten Ausbaumöglichkeiten werden sowohl beim Koppelfeld A wie auch beim Koppelfeld B untersucht. In Fig. 5 bis 9 ist hierzu die Anzahl der Koppelbausteine über der Anzahl der Anschlüsse dargestellt. Innerhalb eines Intervalls (Stufenbreite) ist dabei immer die Anzahl der Koppelbausteine für die rechte Grenze eingezeichnet. Die den Figuren 5 bis 9 zugrundeliegenden Tabellen 1 bis 13 zeigen die Zahl der Anschlüsse N des Koppelfeldes in Abhängigkeit der Anzahl und Größe der Koppelblöcke KVF.

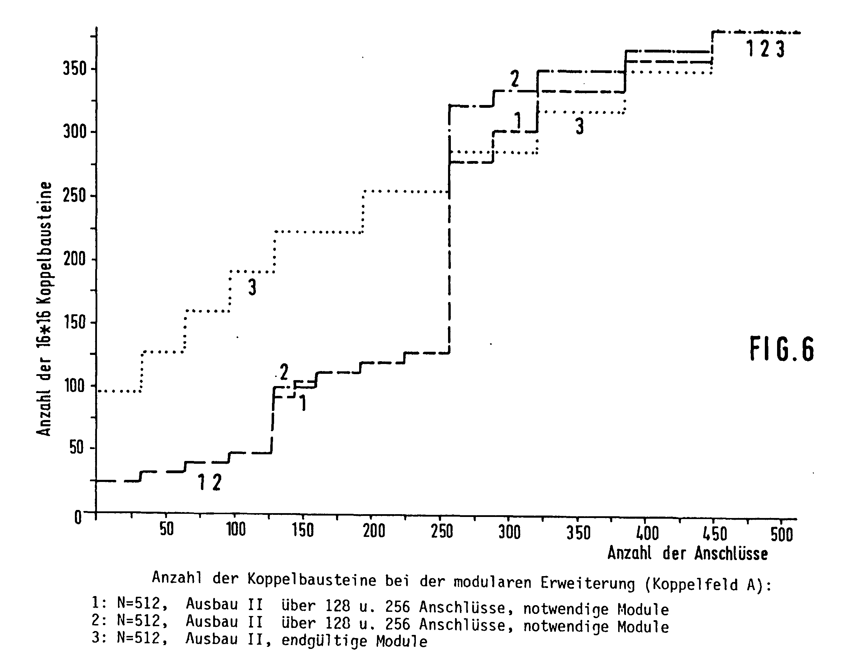

Die modulare Erweiterung des Koppelfeldes A ist in den Fig. 5 und 6 dargestellt. Für verschiedene Endausbauten ist in Fig. 5 die Koppelbausteinzahl bei der modularen Erweiterung mit endgültigen Modulen dargestellt. Dabei zeigt sich, daß durch den Ausbau II (gleichzeitiger Ausbau aller Stufen)Bausteine eingespart werden. Weiterhin wird deutlich, daß Koppelfelder mit großem Endausbau bei kleinen Anschlußzahlen beträchtlich mehr Bausteine benötigen als Koppelfelder mit kleinerem Endausbau. Dies führt zur Überlegung, bei der modularen Erweiterung eines Koppelfeldes mit dem Endausbau N über Koppelfelder mit den Optimalausbauten N/4 und N/2 zu gehen. Zwischen diesen einzelnen Optimalausbauten erfolgt die Erweiterung am besten mit Hilfe des aufwandsärmeren Ausbaus II. Fig. 6 zeigt die Koppelbausteinzahl für einen Endausbau mit 512 Anschlüssen beim Ausbau II mit den endgültigen Modulen (32*32 in der zweiten Stufe) und bei beiden Ausbaumöglichkeiten über 128 und 256 Anschlüsse mit nur den notwendigen Modulen (16*16 oder 32*32 in der zweiten Stufe). Der Ausbau II mit den endgültigen Modulen benötigt dabei ab 256 Anschlüssen geringfügig weniger Koppelbausteine als die beiden Ausbaumöglichkeiten mit nur den notwendigen Modulen. Da aber für kleine Anschlußzahlen beträchtlich mehr Koppelbausteine notwendig sind und da beim Ausbau kein Variantenwechsel vom Prinzip der notwendigen zum Prinzip der endgültigen Module möglich ist, ist der Ausbau II mit nur den notwendigen Modulen die günstigere Lösung.

Für eine aufwandarme Erweiterung ergibt sich somit folgendes Ergebnis:

1. Anwendung des Ausbaus II (gleichzeitiger Ausbau aller Stufen).
2. Erreichen des Endausbaus mit N Anschlüssen über die Optimalausbaustufen.
3. Verwenden von nur den notwendigen Modulen (kleinste Modulgröße 16*16) und sukzessive Erweiterung bis zur endgültigen Modulgröße im Endausbau.

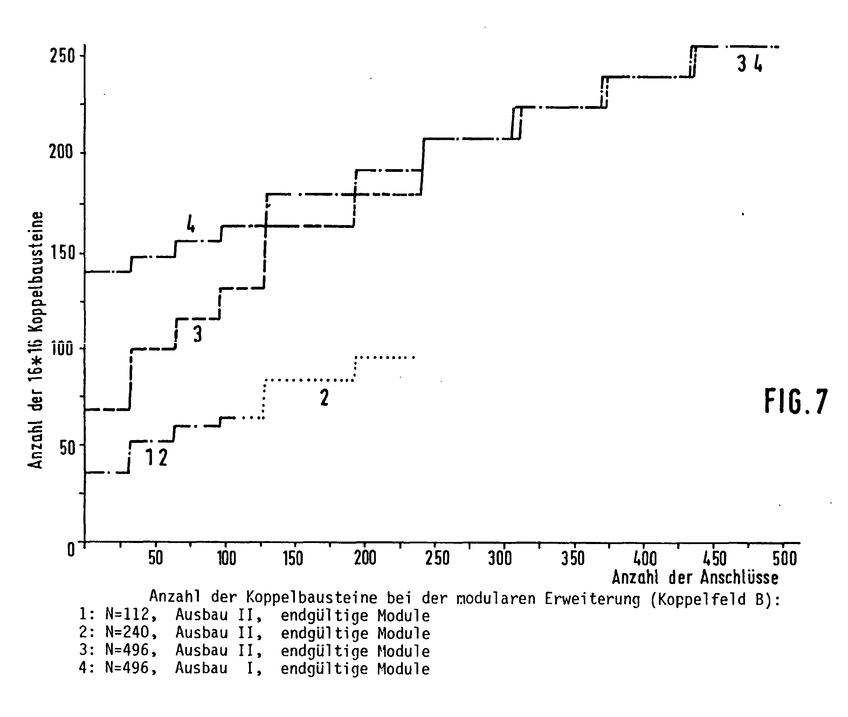

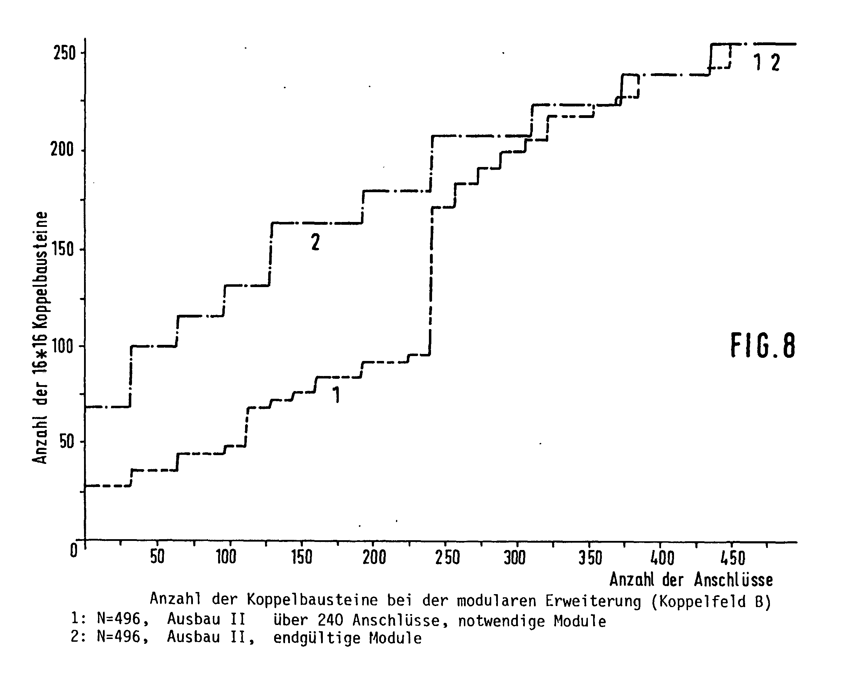

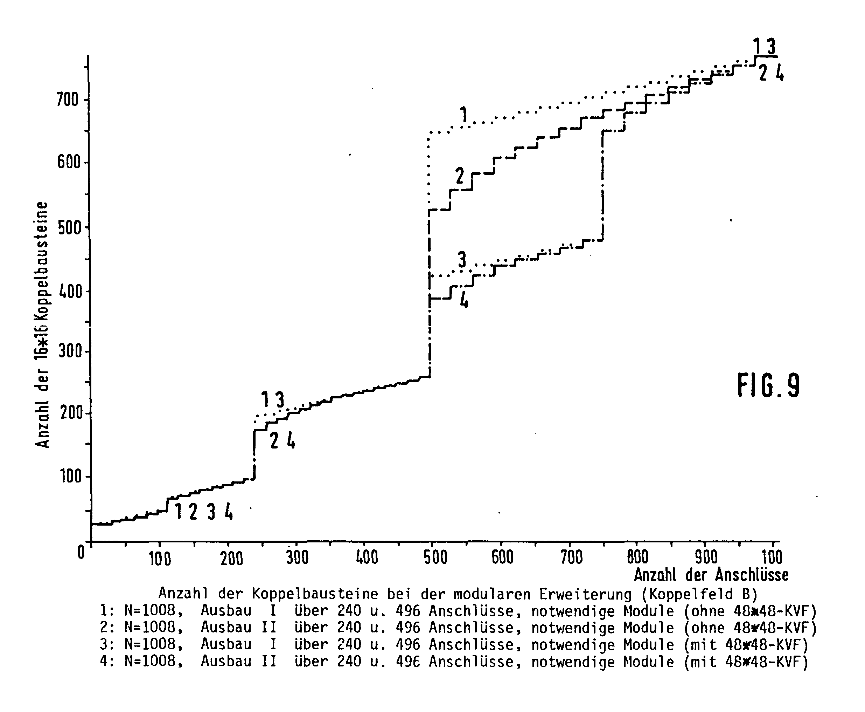

Die modulare Erweiterung des Koppelfeldes B ist in den Fig. 7 bis 9 dargestellt. Die den Fig. 5 und 6 entsprechenden Fig. 7 und 8 zeigen, daß für das Koppelfeld B bezüglich der modularen Erweiterung die gleichen Aussagen wie für das Koppelfeld A gelten. In Fig. 9 ist für einen Endausbau mit N = 1008 Anschlüssen die Koppelbausteinzahl beim Ausbau I und II über 240 und 496 Anschlüssen mit nur den notwendigen Modulen dargestellt. Dabei wird deutlich, daß sowohl durch den Ausbau II als auch durch die Verwendung von 48*48 Koppelblöcken in der zweiten Stufe (entspricht einem Optimalausbau bei N = 752 Anschlüssen) Koppelbausteine eingespart werden können.

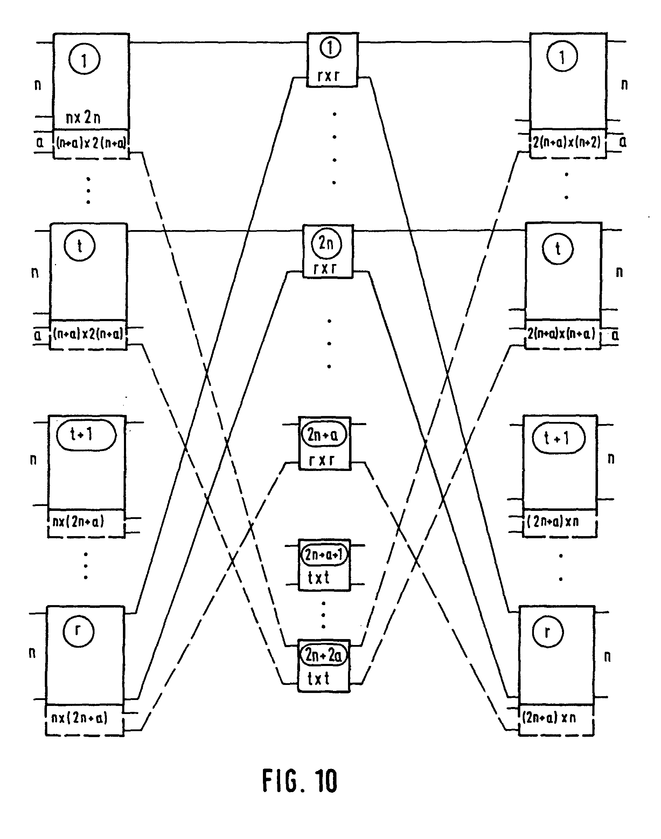

Bisher wurde nur die Variante - Erweiterung erste und dritte Stufe um zusätzliche Koppelblöcke sowie Austausch der vorhandenen Koppelblöcke der zweiten Stufe gegen neue Koppelblöcke, deren Anschlußzahl ein Vielfaches der Anschlußzahl vorhandener Koppelblöcke beträgt - behandelt. Eine weitere Variante hierzu, die in Figur 10 dargestellt ist, wird nun nachfolgend erläutert. Bei dieser Variante wird die zweite Stufe um zusätzliche Koppelblöcke erweitert sowie die vorhandenen Koppelblöcke bei der ersten und dritten Stufe gegen neue Koppelblöcke ausgetauscht, deren Anschlußzahl ein Vielfaches vorhandener Koppelblöcke beträgt. Wie bei der ersten Variante erfolgt auch hier der Austausch stufenweise. Die Vorteile - linearer Verlauf der Zahl der Koppelbausteine über der Anschlußzahl, Erweiterung ohne Vorleistung für den späteren Ausbau - sind bei der Variante gemäß Fig. 10 auch gegeben. Des weiteren erfolgt die Erweiterung auch bei dieser Variante über sogenannte Optimalausbaustufen.

Der Ausbau erfolgt hier ausgehend von einem Ausführungsbeispiel mit r Koppelblöcken der Größe (n x 2x) in der ersten Stufe, 2n Koppelblöpcken der Größe (r x r) in der zweiten Stufe und r Koppelblöcken der Größe (2n x n) in der dritten Stufe, wobei r≠0 ist in folgenden Schritten:

1. Das Koppelfeld wird um N' = t·a zusätzliche Anschlußzahlen mit t≦r erweitert. In der ersten und dritten Stufe werden alle Koppelblöcke erweitert, wobei nur t Koppelblöcke um jeweils a Eingänge vergrößert werden. Dies führt zu folgenden Beziehungen für das erweiterte Koppelfeld:

erste Stufe :

$$t([n + a] \times [2n + 2a])$$

$$[r-t](n \times [2n + a]),$$

zweite Stufe:

$$[2n + a](r \times r)$$

$$a(t \times t),$$

dritte Stufe:

$$t([2n + 2a] \times [n + a])$$

$$[r-t]([2n + a] \times n).$$

Die zuvor für die erste Variante angegebenen Ausführungen gelten hier sinngemäß entsprechend (z.B. betr. der Einsparung von Koppelblöcken).

Der Austausch von Koppelblöcken in der ersten und dritten Stufe kann auch hier während des Betriebs erfolgen. Hierzu wird folgendermaßen vorgegangen:

- zuerst werden die auszutauschenden Koppelblöcke in den Stufen 1 und 3 durch Ersatzschalten der Verbindungen über die redundanten Koppelblöcke freigeschaltet,
- dann kann der Austausch der freigeschalteten Koppelblöcke vorgenommen werden,
- nach dem Austausch werden die ersatzgeschalteten Verbindungen auf die ausgetauschten Koppelblöcke wieder zurückgeschaltet,
- dann werden die vorgenannten Schritte mit anderen auszutauschenden Koppelblöcken der Stufen 1 und 3 so oft wiederholt, bis alle gewünschten Koppelblöcke dieser Stufen ausgetauscht sind,
- anschließend werden die zusätzlichen Koppelblöcke der zweiten Stufe gesteckt und alle neuen ausgetauschten und zusätzlichen Koppelblöcke verkabelt.

Tabelle 1

| | Anzahl der Anschlüsse | | | |
|---|---|---|---|---|
| | 32 | 64 | 96 | 128 |
| **1. und 3. Stufe:** | | | | |
| Größe der Koppelvielfachen | 8x8 | 16x16 | 16x16 | 16x16 |
| Anzahl der Koppelvielfachen | 8 | 8 | 12 | 16 |
| Anzahl der Koppelbausteine 16x16 | 8 | 8 | 12 | 16 |
| **2. Stufe:** | | | | |
| Anzahl der Koppelvielfachen 16x16 | 8 | 16 | 16 | 16 |
| Anzahl der Koppelbausteine 16x16 | 8 | 16 | 16 | 16 |
| Gesamte Anzahl der Koppelbausteine 16x16 | 24 | 32 | 40 | 48 |
| Koppelfeld A, N=128, Ausbau II mit endgültigen Modulen | | | | |

Tabelle 2

| | Anzahl der Anschlüsse | | | | | |
|---|---|---|---|---|---|---|
| | 32 | 64 | 96 | 128 | 192 | 256 |
| **1. und 3. Stufe:** | | | | | | |
| Größe der Koppelvielfachen | 4x4 | 8x8 | 12x12 | 16x16 | 16x16 | 16x16 |
| Anzahl der Koppelvielfachen | 16 | 16 | 16 | 16 | 24 | 32 |
| Anzahl der Koppelbausteine 16x16 | 16 | 16 | 16 | 16 | 24 | 32 |
| **2. Stufe:** | | | | | | |
| Anzahl der Koppelvielfachen 32x32 | 4 | 8 | 12 | 16 | 16 | 16 |
| Anzahl der Koppelbausteine 16x16 | 16 | 32 | 48 | 64 | 64 | 64 |
| Gesamte Anzahl der Koppelbausteine 16x16 | 48 | 64 | 80 | 96 | 112 | 128 |
| Koppelfeld A, N=256, Ausbau II mit endgültigen Modulen | | | | | | |

Tabelle 3

| N | 1. Stufe, 3. Stufe | | | 2.Stufe | | Gesamte Anzahl 16x16 |
|---|---|---|---|---|---|---|
| | KVF | Anzahl KVF | Anzahl 16x16 | Anzahl KVF 64x64 | Anzahl 16x16 | |
| 32 | 4x4 | 16 | 16 | 4 | 64 | 96 |
| 64 | 4x4 | 32 | 32 | 4 | 64 | 128 |
| 96 | 6x6 | 32 | 32 | 6 | 96 | 160 |
| 128 | 8x8 | 32 | 32 | 8 | 128 | 192 |
| 192 | 8x8 | 48 | 48 | 8 | 128 | 224 |
| 256 | 8x8 | 64 | 64 | 8 | 128 | 256 |
| 320 | 10x10 | 64 | 64 | 10 | 160 | 288 |
| 384 | 12x12 | 64 | 64 | 12 | 192 | 320 |
| 448 | 14x14 | 64 | 64 | 14 | 224 | 352 |
| 512 | 16x16 | 64 | 64 | 16 | 256 | 384 |
| Koppelfeld A, N = 512, Ausbau II mit endgültigen Modulen | | | | | | |

Tabelle 4

| N | 1. Stufe, 3. Stufe | 2.Stufe | | Gesamte Anzahl 16x16 |
|---|---|---|---|---|
| | Anzahl KVF 16x16 | Anzahl KVF 64x64 | Anzahl 16x16 | |
| 32 | 4 | 16 | 256 | 264 |
| 64 | 8 | 16 | 256 | 272 |
| 96 | 12 | 16 | 256 | 280 |
| 128 | 16 | 16 | 256 | 288 |
| 192 | 24 | 16 | 256 | 304 |
| 256 | 32 | 16 | 256 | 320 |
| 320 | 40 | 16 | 256 | 336 |
| 384 | 48 | 16 | 256 | 352 |
| 448 | 56 | 16 | 256 | 368 |
| 512 | 64 | 16 | 256 | 384 |
| Koppelfeld A, N = 512, Ausbau I mit endgültigen Modulen | | | | |

Tabelle 5

| N | 1. Stufe, 3. Stufe | | 2.Stufe | | Gesamte Anzahl 16x16 |
|---|---|---|---|---|---|
| | Anzahl und Größe KVF | Anzahl 16x16 | Anzahl und Größe KVF | Anzahl 16x16 | |
| 32 | 4(16x16) | 4 | 16(16x16) | 16 | 24 |
| 64 | 8(16x16) | 8 | 16(16x16) | 16 | 32 |
| 96 | 12(16x16) | 12 | 16(16x16) | 16 | 40 |
| 128 | 16(16x16) | 16 | 16(16x16) | 16 | 48 |
| 160 | 20(16x16) | 20 | 16(32x32) | 64 | 104 |
| 192 | 24(16x16) | 24 | 16(32x32) | 64 | 112 |
| 224 | 28(16x16) | 28 | 16(32x32) | 64 | 120 |
| 256 | 32(16x16) | 32 | 16(32x32) | 64 | 128 |
| 320 | 40(16x16) | 40 | 16(64x64) | 256 | 336 |
| 384 | 48(16x16) | 48 | 16(64x64) | 256 | 352 |

Tabelle 5   (fortgesetzt)

| N | 1. Stufe, 3. Stufe | | 2.Stufe | | Gesamte Anzahl 16x16 |
|---|---|---|---|---|---|
| | Anzahl und Größe KVF | Anzahl 16x16 | Anzahl und Größe KVF | Anzahl 16x16 | |
| 448 | 56(16x16) | 56 | 16(64x64) | 256 | 368 |
| 512 | 64(16x16) | 64 | 16(64x64) | 256 | 384 |
| Koppelfeld A, N = 512, Ausbau I über 128 und 256 Anschlüsse mit nowendigen Modulen | | | | | |

Tabelle 6

| N | 1. Stufe, 3. Stufe | | 2.Stufe | | Gesamte Anzahl 16x16 |
|---|---|---|---|---|---|
| | Anzahl und Größe KVF | Anzahl 16x16 | Anzahl und Größe KVF | Anzahl 16x16 | |
| 32 | 8(8x8) | 8 | 8(16x16) | 8 | 24 |
| 64 | 8(16x16) | 8 | 16(16x16) | 16 | 32 |
| 96 | 12(16x16) | 12 | 16(16x16) | 16 | 40 |
| 128 | 16(16x16) | 16 | 16(16x16) | 16 | 48 |
| 144 | 16(16x16) | | 12(32x32) | | |
| | 4(4x12) | 20 | 4(16x16) | 52 | 92 |
| 160 | 16(16x16) | | 12(32x32) | | |
| | 8(4x12) | 24 | 4(16x16) | 52 | 100 |
| 192 | 16(16x16) | | | | |
| | 8(8x16) | 24 | 16(32x32) | 64 | 112 |
| 224 | 28(16x16) | 28 | 16(32x32) | 64 | 120 |
| 56 | 32(16x16) | 32 | 16(32x32) | 64 | 128 |
| 288 | 32(16x16) | | 10(64x64) | | |
| | 16(2x10) | 48 | 6(32x32) | 184 | 280 |
| 320 | 32(16x16) | | 12(64x64) | | |
| | 16(4x12) | 48 | 4(32x32) | 208 | 304 |
| 384 | 32(16x16) | | 12(64x64) | | |
| | 32(4x12) | 64 | 4(32x32) | 208 | 336 |
| 448 | 32(16x16) | | 14(64x64) | | |
| | 32(6x14) | 64 | 2(32x32) | 232 | 360 |
| 512 | 64(16x16) | 64 | 16(64x64) | 256 | 384 |
| Koppelfeld A, N = 512, Ausbau II über 128 und 256 Anschlüsse mit notwendigen Modulen | | | | | |

Tabelle 7

| | Anzahl der Anschlüsse | | | |
|---|---|---|---|---|
| | 32 | 64 | 96 | 112 |
| **1. und 3. Stufe:** | | | | |
| Größe der Koppelvielfachen | 8x16 | 16x32 | 16x32 | 16x32 |
| Anzahl der Koppelvielfachen | 4 | 4 | 6 | 7 |
| Anzahl der Koppelbausteine 16x16 | 8 | 8 | 12 | 14 |
| **2. Stufe:** | | | | |
| Anzahl der Koppelvielfachen 8x8 | 16 | 32 | 32 | 32 |
| Anzahl der Koppelbausteine 16x16 | 16 | 32 | 32 | 32 |
| Redundanz: | | | | |
| Koppelbausteine 16x16 | 4 | 4 | 4 | 4 |
| Gesamte Anzahl der Koppelbausteine 16x16 | 36 | 52 | 60 | 64 |
| Koppelfeld B, N=112, Ausbau II mit endgültigen Modulen | | | | |

Tabelle 8

| | Anzahl der Anschlüsse | | | | | |
|---|---|---|---|---|---|---|
| | 32 | 64 | 96 | 128 | 192 | 240 |
| **1. und 3. Stufe:** | | | | | | |
| Größe der Koppelvielfachen | 8x16 | 16x32 | 16x32 | 16x32 | 16x32 | 16x32 |
| Anzahl der Koppelvielfachen | 4 | 4 | 6 | 8 | 12 | 15 |
| Anzahl der Koppelbausteine 16x16 | 8 | 8 | 12 | 16 | 24 | 30 |
| **2. Stufe:** | | | | | | |
| Anzahl der Koppelvielfachen 16x16 | 16 | 32 | 32 | 32 | 32 | 32 |
| Anzahl der Koppelbausteine 16x16 | 16 | 32 | 32 | 32 | 32 | 32 |
| Redundanz: | | | | | | |
| Koppelbausteine 16x16 | 4 | 4 | 4 | 4 | 4 | 4 |
| Gesamte Anzahl der Koppelbausteine 16x16 | 36 | 52 | 60 | 68 | 84 | 96 |
| Koppelfeld B, N=240, Ausbau II mit endgültigen Modulen | | | | | | |

Tabelle 9

| N | 1. Stufe, 3. Stufe | | | 2.Stufe | | Redundanz: Anzahl 16x16 | Gesamte Anzahl 16x16 |
|---|---|---|---|---|---|---|---|
| | KVF | Anzahl KVF | Anzahl 16x16 | Anzahl KVF 32x32 | Anzahl 16x16 | | |
| 32 | 4x8 | 8 | 16 | 8 | 32 | 4 | 68 |
| 64 | 8x16 | 8 | 16 | 16 | 64 | 4 | 100 |
| 96 | 8x16 | 12 | 24 | 16 | 64 | 4 | 116 |
| 128 | 8x16 | 16 | 32 | 16 | 64 | 4 | 132 |
| 192 | 8x16 | 24 | 48 | 16 | 64 | 4 | 164 |
| 240 | 10x20 | 24 | 48 | 20 | 80 | 4 | 180 |
| 310 | 10x20 | 31 | 62 | 20 | 80 | 4 | 208 |

Tabelle 9   (fortgesetzt)

| N | 1. Stufe, 3. Stufe | | | 2.Stufe | | Redundanz: Anzahl 16x16 | Gesamte Anzahl 16x16 |
|---|---|---|---|---|---|---|---|
| | KVF | Anzahl KVF | Anzahl 16x16 | Anzahl KVF 32x32 | Anzahl 16x16 | | |
| 372 | 12x24 | 31 | 62 | 24 | 96 | 4 | 224 |
| 434 | 14x28 | 31 | 62 | 28 | 112 | 4 | 240 |
| 496 | 16x32 | 31 | 62 | 32 | 128 | 4 | 256 |
| Koppelfeld B, N = 496, Ausbau II mit endgültigen Modulen | | | | | | | |

Tabelle 10

| N | 1. Stufe, 3. Stufe | | 2.Stufe | | Redundanz: Anzahl 16x16 | Gesamte Anzahl 16x16 |
|---|---|---|---|---|---|---|
| | Anzahl KVF 16x32 | Anzahl 16x16 | Anzahl KVF 32x32 | Anzahl 16x16 | | |
| 32 | 2 | 4 | 32 | 128 | 4 | 140 |
| 64 | 4 | 8 | 32 | 128 | 4 | 148 |
| 96 | 6 | 12 | 32 | 128 | 4 | 156 |
| 128 | 8 | 16 | 32 | 128 | 4 | 164 |
| 192 | 12 | 24 | 32 | 128 | 4 | 180 |
| 240 | 15 | 30 | 32 | 128 | 4 | 192 |
| 304 | 19 | 38 | 32 | 128 | 4 | 208 |
| 368 | 23 | 46 | 32 | 128 | 4 | 224 |
| 432 | 27 | 54 | 32 | 128 | 4 | 240 |
| 496 | 31 | 62 | 32 | 128 | 4 | 256 |
| Koppelfeld B, N = 496, Ausbau I mit endgültigen Modulen | | | | | | |

Tabelle 11

| N | 1. Stufe, 3. Stufe | | 2.Stufe | | Gesamte Anzahl 16x16 |
|---|---|---|---|---|---|
| | Anzahl und Größe KVF | Anzahl 16x32 | Anzahl und Größe KVF | Anzahl 16x16 | |
| 32 | 6(8x16) | 3 | 16(16x16) | 16 | 28 |
| 64 | 10(8x16) | 5 | 16(16x16) | 16 | 36 |
| 96 | 14(8x16) | 7 | 16(16x16) | 16 | 44 |
| 112 | 16(8x16) | 8 | 16(16x16) | 16 | 48 |
| 128 | 9(16x32) | 9 | 32(16x16) | 32 | 68 |
| 160 | 11(16x32) | 11 | 32(16x16) | 32 | 76 |
| 192 | 13(16x32) | 13 | 32(16x16) | 32 | 84 |
| 224 | 15(16x32) | 15 | 32(16x16) | 32 | 92 |
| 240 | 16(16x32) | 16 | 32(16x16) | 32 | 96 |
| 256 | 16(16x32) 4(4x20) | 20 | 20(32x32) 12(16x16) | 92 | 172 |
| 272 | 16(16x32) 4(8x24) | 20 | 24(32x32) 8(16x16) | 104 | 184 |

Tabelle 11   (fortgesetzt)

| N | 1. Stufe, 3. Stufe | | 2.Stufe | | Gesamte Anzahl 16x16 |
|---|---|---|---|---|---|
| | Anzahl und Größe KVF | Anzahl 16x32 | Anzahl und Größe KVF | Anzahl 16x16 | |
| 304 | 16(16x32) | | 24(32x32) | | |
| | 8(8x24) | 24 | 8(16x16) | 104 | 200 |
| 320 | 16(16x32) | | 26(32x32) | | |
| | 8(10x26) | 24 | 6(16x16) | 110 | 206 |
| 352 | 16(16x32) | | 30(32x32) | | |
| | 8(14x30) | 24 | 2(16x16) | 122 | 218 |
| 368 | 24(16x32) | 24 | 32(32x32) | 128 | 224 |
| 384 | 25(16x32) | 25 | 32(32x32) | 128 | 228 |
| 496 | 32(16x32) | 32 | 32(32x32) | 128 | 256 |
| Koppelfeld B, N = 496, Ausbau II über 240 Anschlüsse mit notwendigen Modulen | | | | | |

Tabelle 12

| N | 1. Stufe, 3. Stufe | | 2. Stufe | | Gesamte Anzahl 16x16 |
|---|---|---|---|---|---|
| | Anzahl und Größe KVF | Anzahl 16x32 | Anzahl und Größe KVF | Anzahl 16x16 | |
| 528 | 32(16x32) | | 20(64x64) | | |
| | 8(4x20) | 40 | 12(32x32) | 368 | 528 |
| 560 | 32(16x32) | | 20(64x64) | | |
| | 16(4x20) | 48 | 12(32x32) | 368 | 560 |
| 592 | 32(16x32) | | 22(64x64) | | |
| | 16(6x22) | 48 | 10(32x32) | 392 | 584 |
| 624 | 32(16x32) | | 24(64x64) | | |
| | 16(8x24) | 48 | 8(32x32) | 416 | 608 |
| 688 | 32(16x32) | | 24(64x64) | | |
| | 24(8x24) | 56 | 8(32x32) | 416 | 640 |
| 752 | 32(16x32) | | 24(64x64) | | |
| | 32(8x24) | 64 | 8(32x32) | 416 | 672 |
| 784 | 32(16x32) | | 25(64x64) | | |
| | 32(9x25) | 64 | 7(32x32) | 428 | 684 |
| 880 | 32(16x32) | | 28(64x64) | | |
| | 32(12x28) | 64 | 4(32x32) | 464 | 720 |
| 1008 | 64(16x32) | 64 | 32(64x64) | 512 | 768 |
| Koppelfeld B, N = 1008, Ausbau II über 496 Anschlüsse mit notwendigen Modulen und ohne 48*48-Koppelvielfach | | | | | |

Tabelle 13

| N | 1. Stufe, 3. Stufe | | 2. Stufe | | Gesamte Anzahl 16x16 |
|---|---|---|---|---|---|
| | Anzahl und Größe KVF | Anzahl 16x32 | Anzahl und Größe KVF | Anzahl 16x16 | |
| 528 | 32(16x32) | | 20(48x48) | | |

**EP 0 384 961 B2**

Tabelle 13  (fortgesetzt)

| N | 1. Stufe, 3. Stufe | | 2. Stufe | | Gesamte Anzahl 16x16 |
|---|---|---|---|---|---|
| | Anzahl und Größe KVF | Anzahl 16x32 | Anzahl und Größe KVF | Anzahl 16x16 | |
| | 8(4x20) | 40 | 12(32x32) | 228 | 388 |
| 560 | 32(16x32) | | 24(48x48) | | |
| | 8(8x24) | 40 | 8(32x32) | 248 | 408 |
| 624 | 32(16x32) | | 24(48x48) | | |
| | 16(8x24) | 48 | 8(32x32) | 248 | 440 |
| 688 | 32(16x32) | | 28(48x48) | | |
| | 16(12x28) | 48 | 4(32x32) | 268 | 460 |
| 752 | 48(16x32) | 48 | 32(48x48) | 288 | 480 |
| 784 | 48(16x32) | | 20(64x64) | | |
| | 8(4x20) | 56 | 12(48x48) | 428 | 652 |
| 816 | 48(16x32) | | 24(64x64) | | |
| | 8(8x24) | 56 | 8(48x48) | 456 | 680 |
| 848 | 48(16x32) | | 24(64x64) | | |
| | 12(8x24) | 60 | 8(48x48) | 456 | 696 |
| 880 | 48(16x32) | | 24(64x64) | | |
| | 16(8x24) | 64 | 8(48x48) | 456 | 712 |
| 944 | 48(16x32) | | 28(64x64) | | |
| | 16(12x28) | 64 | 4(48x48) | 484 | 740 |
| 1008 | 64(16x32) | 64 | 32(64x64) | 512 | 768 |
| Koppelfeld B, N = 1008, Ausbau II über 496 Anschlüsse mit notwendigen Modulen und mit 48*48-Koppelvielfach | | | | | |

**Patentansprüche**

1.  Verfahren zur schrittweisen Erweiterung eines mit Koppelblöcken aufgebauten dreistufigen blockierungsfreien voll und homogen bestückten und redundanten Clos-Koppelfeldes, bei welchem durch je einen redundanten Koppelblock in jeder Stufe ein beliebiger Koppelblock einer Stufe unter Aufrechterhaltung der Blockierungsfreiheit ausfallen darf, **gekennzeichnet durch** folgende Erweiterungsmaßnahmen:

    - wenn in der ersten und dritten Stufe Koppelblöcke gleicher Größe vorhanden sind, wird die erste und dritte Stufe um zusätzliche Koppelblöcke kleinerer oder gleicher Anschlußzahl der vorhandenen Koppelblöcke erweitert,
    - bei der zweiten Stufe werden die vorhandenen Koppelblöcke gegen neue Koppelblöcke höherer Anschlußzahl ausgetauscht, wobei sich die Anzahl der auszutauschenden Koppelblöcke aus der Anschlußzahl eines vorhandenen und der Anschlußzahl eines zusätzlichen Koppelblocks in der ersten Stufe ergibt,
    - die Erweiterug wird bis zum Erreichen einer jeweils folgenden Optimalausbaustufe vorgenommen, die eine voll und homogen bestückte zweite Koppelfeldstufe aufweist, und wobei die erste und dritte Stufe entsprechend dem in der zweiten Stufe eingebauten Koppelblock ebenfalls voll ausgebaut ist und die ein Minimum an gleichartigen Koppelblöcken in der ersten und in der zweiten Stufe bei voller Anschlußbelegung der nichtredundanten Eingänge aufweist, wobei deren Erweiterung über Koppelblöcke erfolgt, deren Anschlußzahlen Vielfache unsprünglich vorhandener Koppelblöcke betragen,
    - nach Erreichen der optimal ausbaustufe wird nach den beiden zuerst beschriebenen Schritten erweitert.

2.  Verfahren nach Anspruch 1, **dadurch gekennzeichnet, daß** bei der ersten und dritten Stufe alle vorhandenen Koppelblöcke gegen neue Koppelblöcke größerer Anschlußzahl ausgetauscht werden, wobei nur bei einem Teil der neuen Koppelblöcke die neu hinzugekommenen Anschlüsse beschaltet werden.

3.  Verfahren nach Anspruch 1 ausgehend von einem Koppelfeld mit Optimalausbau, wobei die erste Stufe r Koppelblöcke der Größe (n x 2n), die
zweite Stufe 2n Koppelblöcke der Größe (r x r) und die dritte Stufe r Koppelblöcke der Größe (2n x n) besitzt, mit

r = Anzahl der Koppelblöcke der ersten und dritten Stufe,
n = Zahl der Eingänge der Koppelblöcke in der ersten Stufe bzw. Zahl der Ausgänge der Koppelblöcke in der dritten Stufe, **dadurch gekennzeichnet**,

daß die Erweiterung um N = s·a zusätzliche Anschlußzahlen des Koppelfeldes, wobei s die Anzahl der zusätzlichen Koppelblöcke der ersten und dritten Stufe und a jeweils die Zahl der Eingänge dieser zusätzlichen Koppelblöcke ist, mit a≦n folgendermaßen vorgenommen wird:

- für r≠0

  erste Stufe :

$$r(n \times 2n)$$

$$s(a \times [a + n]),$$

  zweite Stufe:

$$[n + a]([r + s] \times [r + s])$$

$$[n-a](r \times r),$$

  dritte Stufe:

$$r(2n \times n)$$

$$s([a + n] \times a),$$

wobei für a<n der Austausch von n + a Koppelblöcken in der zweiten Stufe erfolgt und für a=n der Austausch aller 2n Koppelblöcke in der zweiten Stufe.

4. Verfahren nach einem der Ansprüche 1, 2, oder 3, **dadurch gekennzeichnet, daß** die Erweiterung in folgenden Schritten durchgeführt wird:

- Freischalten eines auszutauschenden Koppelblocks in der zweiten Stufe durch Ersatzschalten der Verbindungen über den in der zweiten Stufe vorgesehenen redundanten Koppelblock,
- Austauschen des freigeschalteten Koppelblocks,
- Zurückschalten der ersatzgeschalteten Verbindungen,
- Wiederholen dieser Schritte mit anderen Koppelblöcken bis alle gewünschten Koppelblöcke der zweiten Stufe ausgetauscht und vergrößert sind,
- Stecken der zusatzlichen Koppelblöcke in der ersten und dritten Stufe,
- Verkabeln der ausgetauschten und zusätzlichen Koppelblöcke.

## Claims

1. Method for the stepwise extension of a three-stage, blocking-free, fully and homogeneously equipped and redundant Clos coupling field, which is built up of coupling blocks and in which by virtue of a redundant coupling block in each stage any desired coupling block of one stage may fail while maintaining the freedom from blocking, **characterised by** the following extension measures:

- when coupling blocks of like size are present in the first and the third stage, the first and the third stage is extended by additional coupling blocks of a number of connections smaller than or equal to the coupling blocks present,
- the coupling blocks present in the second stage are exchanged against new coupling blocks of a higher number of connections, wherein the number of the coupling blocks to be exchanged results from the number of connections of a coupling block present in the first stage and the number of connections of an additional coupling block in the first stage,
- the extension is undertaken until attainment of a respective following optimum development stage which comprises a fully and homogeneously equipped second coupling field stage, and wherein the first and the third stage is similarly fully developed in correspondence with the coupling block incorporated in the second stage, and which comprise a minimum of like coupling blocks in the first and the second stage with full connection engagement of the non-redundant inputs, wherein the extension thereof is carried out by way of coupling blocks, the numbers of connections of which are a multiple of the coupling blocks originally present, and
- after attainment of the optimum development stage the extending is according to the two initially described steps.

2. Method according to claim 1, **characterised in that** all coupling blocks present in the first and the third stage are exchanged against new coupling blocks of a higher number of connections, wherein the newly added connections are wired in only a part of the new coupling blocks.

3. Method according to claim 1, starting out from a coupling field with optimum development, wherein

the first stage has r coupling blocks of the size (n.2n).
the second stage has 2n coupling blocks of the size (r.r) and
the third stage has r coupling blocks of the size (2n.n), wherein

$r =$ number of the coupling blocks of the first and the third stage and
$n =$ number of the inputs of the coupling blocks in the first stage or number of the outputs of the coupling blocks in the third stage,

**characterised in that** the extension by N = s.a additional number of connections of the coupling field, wherein s is the number of the additional coupling blocks of the first and the third stage and a is the respective number of the inputs of these additional coupling blocks, is undertaken in the following manner when a is at most equal to n:

- for $r \neq 0$

first stage :

$$r(n.2n)$$

$$s(a.[a+n])$$

second stage :

$$[n+a]([r+s].[r+s])$$

$$[n-a](r.r)$$

third stage :

$$r(2n.n)$$

$$s([a+n].a).$$

wherein the exchange of n+a coupling blocks takes place in the second stage when a is less than n and the exchange of all 2n coupling blocks takes place in the second stage when a is equal to n.

4. Method according to one of claims 1, 2 or 3, **characterised in that** the extension is carried out in the following steps:

- switching-free a coupling block to be exchanged in the second stage by substitutional switching of the connections by way of the redundant coupling block provided in the second stage,
- exchanging of the coupling block switched free,
- switching-back of the substitutionally switched connections,
- repetition of these steps with other coupling blocks until all desired coupling blocks of the second stage have been exchanged and extended,
- plugging of the additional coupling blocks in the first and the third stage and
- wiring of the exchanged and additional coupling blocks.

## Revendications

1. Procédé pour l'extension progressive d'un réseau de commutation de Clos à trois étages, constitué par des blocs de commutation, ne pouvant pas se bloquer, équipé d'une manière complète et homogène et redondant, réseau dans lequel, en raison de la présence d'un bloc respectif de commutation redondant dans chaque étage, un bloc quelconque de commutation d'un étage peut être défaillant alors qu'est conservée la propriété de ne pouvoir se bloquer, procédé **caractérisé par** les dispositions d'extension suivantes :

- si les blocs de commutation de même dimension sont présents dans les premier et troisième étages, on accroît les premier et troisième étages de blocs de commutation supplémentaires ayant un nombre de raccordements inférieur ou égal au nombre de raccordements des blocs de commutation présents,
- dans le second étage, on remplace les blocs de commutation présents par de nouveaux blocs de commutation ayant un nombre de raccordements plus élevé, le nombre des blocs de commutation devant être échangés résultant du nombre de raccords d'un bloc de commutation existant et du nombre de raccordements d'un bloc de commutation supplémentaire dans le premier étage,
- on procède à l'extension jusqu'à l'obtention d'un étage d'extension optimal respectivement suivant, qui comporte un second étage du réseau de commutation équipé d'une manière complète et homogène, et dans lequel les premier et troisièmes étages sont également complètement installés conformément au bloc de couplage monté dans le second étage, et qui possède un minimum de blocs de commutation identiques dans les premier et second étages dans le cas d'une occupation complète de raccordement des entrées non redondantes, leur extension s'effectuant au-delà des blocs de commutation, dont les nombres de raccordements sont égaux à des multiples des blocs de commutation présents initialement,
- une fois l'étage d'extension optimal atteint, on procède à l'extension en suivant les deux étapes décrites en premier lieu.

2. Procédé selon la revendication 1, **caractérisé en ce que** dans le cas des premier et troisième étages, tous les blocs de commutation existants sont remplacés par de nouveaux blocs de commutation ayant un nombre plus grand de raccordements, les raccordements nouvellement ajoutés étant câblés uniquement pour une partie du nouveau bloc de commutation.

3. Procédé selon la revendication 1, partant d'un réseau de commutation d'extension optimale, réseau dans lequel :

le premier étage possède r blocs de commutation de dimension (n x 2n)
le second étage possède 2n blocs de commutation de dimension (r x r) et
le troisième étage possède r blocs de commutation de dimension (2n x n),
avec

r = nombre de blocs de commutation du premier et du troisième étage

n = nombre des entrées des blocs de commutation dans le premier étage ou nombre des sorties des blocs de commutation dans le troisième étage,

procédé **caractérisé**
**par** le fait que l'extension porte sur N = s.a nombres de raccordements supplémentaires du réseau de commutation, s étant le nombre des blocs de commutation supplémentaires du premier et du troisième étage et a étant le nombre des entrées de chacun de ces blocs de commutation supplémentaires, avec $a \leq n$:

- pour $r \neq 0$

premier étage:

$$r(n \times 2n)$$

$$s(a \times [a+n])$$

deuxième étage:

$$[n+a] ([r+s] \times [r+s])$$

$$[n-a] (r \times r),$$

troisième étage:

$$r(2n \times n)$$

$$s([a+n] \times a),$$

étant précisé que pour a < n l'échange de n+a blocs de commutation se fait dans le second étage et pour a=n l'échange de l'ensemble des 2n blocs de commutation se fait dans le second étage.

4. Procédé selon l'une quelconque des revendications 1, 2 ou 3, **caractérisé par** le fait que l'on procède à l'extension selon les pas suivants :

- libération d'un bloc de commutation à échanger du second étage par branchement de remplacement des liaisons au moyen du bloc de commutation redondant prévu dans le second étage,
- échange du bloc de commutation libéré,
- commutation en retour des liaisons réalisées branchées en remplacement,
- répétition de ces pas avec d'autres blocs de commutation jusqu'à ce que tous les blocs de commutation désirés du second étage soient échangés et agrandis,
- enfichage des blocs de commutation supplémentaires dans les premier et troisième étages,
- câblage des blocs de commutation échangés et supplémentaires.

FIG.1

FIG.2

FIG. 3

FIG. 4

FIG. 5

Anzahl der 16 ✳ 16 Koppelbausteine

Anzahl der Anschlüsse

Anzahl der Koppelbausteine bei der modularen Erweiterung (Koppelfeld A):

1: N=512,  Ausbau  I, endgültige Module
2: N=512,  Ausbau II, endgültige Module
3: N=256,  Ausbau II, endgültige Module
4: N=128,  Ausbau II, endgültige Module

Anzahl der Koppelbausteine bei der modularen Erweiterung (Koppelfeld A):

1: N=512,  Ausbau II  über 128 u. 256 Anschlüsse, notwendige Module
2: N=512,  Ausbau II  über 128 u. 256 Anschlüsse, notwendige Module
3: N=512,  Ausbau II, endgültige Module

EP 0 384 961 B2

FIG.7

Anzahl der Koppelbausteine bei der modularen Erweiterung (Koppelfeld B)
1: N=496, Ausbau II    über 240 Anschlüsse, notwendige Module
2: N=496, Ausbau II,  endgültige Module

EP 0 384 961 B2

**FIG.9**

Anzahl der Koppelbausteine bei der modularen Erweiterung (Koppelfeld B)

1: N=1008, Ausbau I über 240 u. 496 Anschlüsse, notwendige Module (ohne 48*48-KVF)
2: N=1008, Ausbau II über 240 u. 496 Anschlüsse, notwendige Module (ohne 48*48-KVF)
3: N=1008, Ausbau I über 240 u. 496 Anschlüsse, notwendige Module (mit 48*48-KVF)
4: N=1008, Ausbau II über 240 u. 496 Anschlüsse, notwendige Module (mit 48*48-KVF)

EP 0 384 961 B2

FIG. 10